# EUROPEAN PATENT APPLICATION

(11) **EP 3 961 249 A1**
(43) Date of publication of application: **02.03.2022**
(21) Application number: 21193097.9
(22) Date of filing: 25.08.2021
(51) Int. Cl.: G01S 7/481, G01S 7/484, G01S 7/497, G01S 7/51

(54) **LASER BEAM SYSTEM AND LIDAR**

(30) Priority: 27.08.2020 US 202063070876 P
(71) Applicant: Hon Hai Precision Industry Co., Ltd., New Taipei City (TW)
(72) Inventor: TSENG, YUNG-CHANG, New Taipei (TW); TSENG, KUO-FONG, New Taipei (TW)
(74) Representative: Zaboliene, Reda

(57) **Abstract**

A laser beam system which is self-adjusting for ambient light conditions, and which is not affected by vibration of a moving vehicle includes a light source (11), at least one scanning galvanometer (15), a detector (14), and a controller (17). The light source emits a laser beam, part of which is directed to the scanning galvanometer and part to a target object (200), the light reflected by the target object shares a light path with part of the emitted light. The detector receives the reflected light and generates signals accordingly. The controller receives the signals and obtains information of the target object as to distance and shape according to the signals of detection.

## Description

### FIELD

The subject matter herein generally relates to laser detection technology, particularly relates to a laser beam system and a lidar having the laser beam system.

### BACKGROUND

Lidar is widely used in unmanned driving, laser ranging, and other fields. Lidar can detect accurately by emitting source laser beam and receiving reflected laser from objects in environment. In an optical system of the lidar, a light path of the source laser beam and a light path of the reflected laser are different, which leads to a complex design of the optical system. Heat dissipation is poor due to a long-term continuous output of high-power source laser beam. Furthermore, optical components (such as laser scanning galvanometers) in the lidar have poor tolerance to vibration, which may shorten a service life of the lidar when the lidar is mounted in a vehicle.

Therefore, there is room for improvement in the art.

### BRIEF DESCRIPTION OF THE DRAWINGS

Implementations of the present disclosure will now be described, by way of embodiment, with reference to the attached figures.
FIG. 1 is a schematic diagram of structure of a lidar and a target object in an embodiment of the disclosure.
FIG. 2 is a schematic diagram of a module structure of the lidar in FIG. 1.
FIG. 3 is a schematic diagram of a structure of the laser beam system in FIG. 2.

### DETAILED DESCRIPTION

It will be appreciated that for simplicity and clarity of illustration, where appropriate, reference numerals have been repeated among different figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

The term "coupled" is defined as connected, whether directly or indirectly through intervening components, and is not necessarily limited to physical connections. The connection can be such that the objects are permanently connected or releasably connected. The term "comprising" when utilized, means "including, but not necessarily limited to"; it specifically indicates open-ended inclusion or membership in the so-described combination, group, series, and the like.

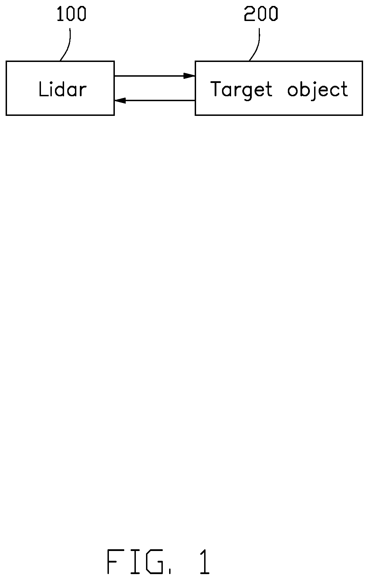

FIG. 1 shows a lidar 100 for obtaining information of a target object 200. The lidar 100 may be applied to various scenes such as automatic driving, 3D mapping, security monitoring, etc. The information includes at least information as to distance or/and information as to shape of the target object 200.

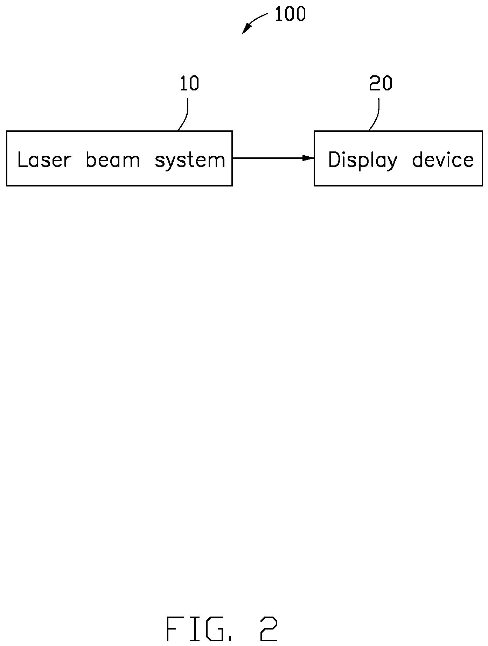

FIG. 2 shows a lidar 100 including a laser beam system 10 and a display device 20. In the present embodiment, the laser beam system 10 is electrically connected to the display device 20. In other embodiment s, the laser beam system 10 and the display device 20 are connected wirelessly. The laser beam system 10 is configured to obtain information of the target object 200. The display device 20 is configured to receive the information from the laser beam system 10 and to display images accordingly. The images may show the structure of the target object 200. The display device 20 may be a liquid crystal display device, a light-emitting diode display device, or the like.

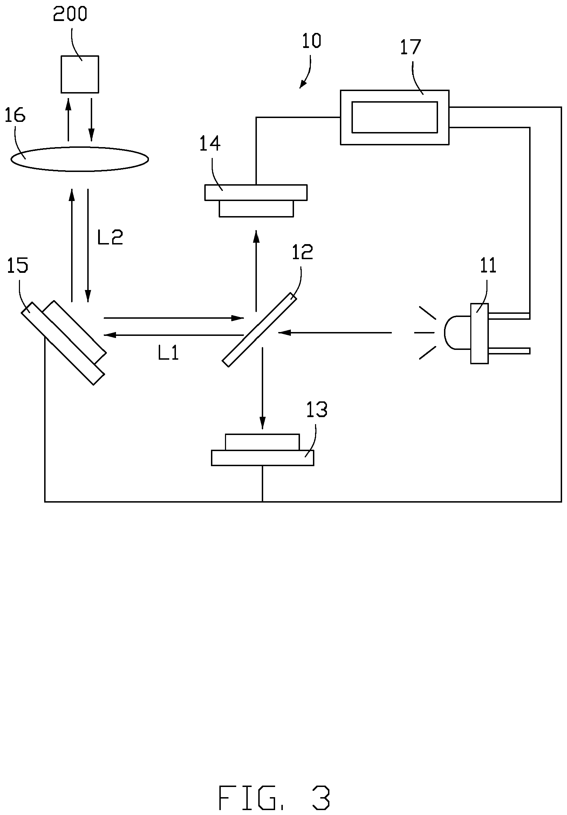

Referring to FIG. 3, the laser beam system 10 includes a light source 11. The light source 11 is configured to emit source laser beam L1. In the present embodiment, the light source 11 is a laser. In other embodiments, the light source 11 may also be a laser array including a plurality of lasers.

The laser beam system 10 further includes a light-guiding element 12, a power detector 13, and a scanning galvanometer 15. In the present embodiment, the light -guiding element 12 is a light-splitting film for reflecting a first part of the source laser beam L1 to the power detector 13, and for transmitting a second part of the source laser beam L1 to the scanning galvanometer 15. In other embodiments, the light-guiding element 12 may be a film with coated area, a lens combination, etc. The present disclosure does not limit specific structure or specific type of the light-guiding element 12, as long as the light-guiding element 12 can be used to guide the first part of the source laser beam L1 to the power detector 13 and to guide the second part of the light source laser beam L1 to the scanning galvanometer 15.

The power detector 13 is used to generate feedback signals by photoelectric conversion according to the source laser beam L1 received. The feedback signal is an electrical signal, such as a current signal or a voltage signal.

The scanning galvanometer 15 is used to guide the first part of the source laser beam L1 received to the target object 200. In the present embodiment, the scanning galvanometer 15 is rotatable and is used to reflect the first part of the source laser beam L1 received. The angle of incidence to the target object 200 can be controlled by controlling a rotation angle of the scanning galvanometer 15.

The rotation angle of the scanning galvanometer 15 can be different during different working periods, so that the first part of the source light L1 is guided to different positions on the target object 200 during different working periods, or the first part of the source light L1 is guided to different target objects 200 during different working periods.

The laser beam system 10 shown in FIG. 3 includes one scanning galvanometer 15. In other embodiments of the present embodiment, the laser beam system 10 may include a plurality of scanning galvanometers 15. Each scanning galvanometer 15 is rotatable. By controlling the rotation angle of each scanning galvanometer 15, the plurality of scanning galvanometers 15 cooperate to control the incidence angle.

The target object 200 will reflect the received first part of source laser beam L1. In the present embodiment, the first part of the source laser beam L1 reflected by the target object 200 is defined as detection light L2. In the present embodiment, the target object 200 is an object to be detected in the environment. For example, the target object 200 may be an obstacle on a moving path when the lidar 100 is on an unmanned vehicle.

The unmanned vehicle may vibrate and jump, passing these vibrations to the scanning galvanometers 15. In the present embodiment, the scanning galvanometer 15 is driven by electromagnetic force, which renders the scanning galvanometer 15 resistant to vibration. The use of a scanning galvanometer 15 improves a stability of the laser beam system 10, which is conducive to extending a service life of the lidar 100.

The laser beam system 10 further includes a lens 16. In the present embodiment, the lens 16 may be used to focus the first part of the source laser beam L1 on the target object 200, and to receive the detection light L2 reflected by the target object 200, and to focus the detection light L2 on the scanning galvanometer 15.

The laser beam system 10 further includes a detector 14. The scanning galvanometer 15 is also used to guide the detection light L2 to the light-guiding element 12. The light-guiding element 12 is used to reflect the detection light L2 to the detector 14. The detector 14 is configured to generate the detection signal by photoelectric conversion according to the detection light L2 received. The detection signal is an electrical signal, such as a current signal or a voltage signal.

The laser beam system 10 further includes a controller 17. The controller 17 is electrically connected with the light source 11, the scanning galvanometer 15, the power detector 13, and the detector 14. The controller is configured to control the light source 11 emitting the source laser beam L1, to control the rotation angle of the scanning galvanometer 15, and to receive the detection signal from the detector 14 and the feedback signal from the power detector 13. The controller 17 is further configured to control the power of the light source L1 according to the feedback signal, and to obtain the information of the target object 200 according to the detection signal (distance information, shape information, etc.). The controller 17 may be a circuit, a chip, a group of chips, or a computer.

The following describes a working process of the laser beam system 10.

The controller 17 outputs a controlling signal to the light source 11 to control the light source 11 to output the source laser beam L1 at an initial power level. The source laser beam L1 enters the light-guiding element 12. The light-guiding element 12 reflects the first part of the source laser beam L1 to the power detector 13 and transmits the second part of the source laser beam L1 to the scanning galvanometer 15.

The power detector 13 generates the feedback signals according to the received first part of the source laser beam L1, wherein the feedback signals carry power information of the source laser beam L1. The power detector 13 returns the feedback signals to the controller 17, enabling the controller 17 to obtain a current power of the source laser beam L1 according to the feedback signals. That is, the above process enables the controller 17 to know the current power of the source laser beam L1 from the light source 11, so as to monitor the current power of the source laser beam L1 in real-time.

The current power level of the source laser beam L1 can be compared to the initial power level. In the present embodiment, the current power level is consistent with the initial power level when a difference between the current power and the initial power is within a preset range. The light source 11 indicates normal working when the current power is consistent with the initial power, and it indicates that the light source 11 is not working normally when the current power is not consistent with the initial power.

Real-time monitoring of the current power of the source laser beam L1 enables timely troubleshooting of the light source 11, the light source 11 is constantly monitored and reductions in accuracy when the light source 11 works abnormally can be avoided.

The scanning galvanometer 15 in cooperation with the lens 16 guides the source laser beam L1 received to the target object 200. The target object 200 reflects the detection light L2. Lens 16 focuses the detection light L2 to the scanning galvanometer 15. The scanning galvanometer 15 guides the detection light L2 to the detector 14 in cooperation with the light-guiding element 12. The detector 14 generates the detection signal according to the detection light L2 received, and returns the detection signal to the controller 17. The controller 17 obtains the information of the target object 200 based on a preset algorithm and according to the detection signal. The information of the target object 200 may be distance information, shape information of the target object 200, etc..

According to the above, the source laser beam L1 and the detection light L2 share the light path from the target object 200 to the light-guiding element 12, which reduces a volume of the laser beam system 10, and thus reduces a complexity of the laser beam system 10.

The controller 17 is further configured to obtain brightness of ambient light of the environment according to the detection light L2 received. The controller 17 is further configured to adjust the power of the source laser beam L1 from the light source 11 according to the brightness of the ambient light.

In the present embodiment, the power of the source laser beam L1 is such as to be proportional to the brightness of the ambient light.

Therefore, the controller 17 can adjust the power of the source laser beam L1 in real time for the conditions. That is, the power of the source laser beam L1 is reduced when the ambient light is low brightness, and the power of the source laser beam L1 is increased when the ambient light is high brightness, which avoids the light source 11 working in a high power for a long time. Heat generated by the light source 11 is not constantly high and poor heat dissipation of the light source 11 is not a problem. Reduction of energy consumption of the laser beam system 10 is also achieved.

The laser beam system 10 of the present embodiment includes the scanning galvanometer 15 for guiding the source laser beam L1 to the target object 200 and for receiving the detection light L2 reflected by the target object 200, so that the source laser beam L1 and the detection light L2 share the light path, reducing the volume of the laser beam system 10.

The controller 17 can monitor the current power of the source laser beam L1 in real time according to the feedback signal from the power detector 13, to constantly monitor the normal working, abnormal operation of the light source 11 is detected immediately.

The controller 17 adjusts the power of the source laser beam L1 in real time according to the brightness of the ambient light. That is, the power of the source laser beam L1 is reduced for low brightness of the ambient light, and the power of the source laser beam L1 is increased when brightness of the ambient light is high, avoiding the light source 11 working in a high power for a long time.

The scanning galvanometer 15 is driven by electromagnetic force, which is relatively immune to vibration. When the laser beam system 10 is applied to devices prone to vibration (such as unmanned vehicles), stability of the laser beam system 10 is increased, and the service life of the laser beam system 10 is prolonged.

It is to be understood, even though information and advantages of the present embodiments have been set forth in the foregoing description, together with details of the structures and functions of the present embodiments, the disclosure is illustrative only. Changes may be made in detail, especially in matters of shape, size, and arrangement of parts within the principles of the present embodiments to the full extent indicated by the plain meaning of the terms in which the appended claims are expressed.

## Claims

1. A laser beam system comprising:
a light source for emitting a source laser beam;
at least one scanning galvanometer on a light path of the source laser beam, wherein the at least one scanning galvanometer is configured to project at least a part of the source laser beam to a target object, the at least a part of the source laser beam reflected by the target object is defined as detection light, and the at least one scanning galvanometer is configured to guide the detection light, the detection light and the at least a part of the source laser beam sharing the light path;
a detector configured to receive the detection light guided from the at least one scanning galvanometer, generate and output detection signals according to the received detection light; and
a controller electrically connected to each of the light source and the detector, the controller configured to receive the detection signals and to obtain information of the target object according to the detection signals.

2. The laser beam system of claim 1, wherein the controller is further configured to adjust a power of the source laser beam of the light source according to an intensity of an ambient light, the power of the source laser beam is proportional to the intensity of the ambient light.

3. The laser beam system of claim 1, wherein the at least one scanning galvanometer is driven by electromagnetic forces.

4. The laser beam system of claim 1, wherein the at least one scanning galvanometer is rotatable, the controller is configured to control the at least one scanning galvanometer to project the source laser beam to the target object at different angles by controlling rotating of the at least one scanning galvanometer.

5. The laser beam system of claim 1, further comprising a power detector configured for receiving a first part of the source laser beam to generate and output feedback signals according to the first part of the source laser beam, wherein
the controller is electrically connected to the power detector, and the controller monitors a working state of the light source according to the feedback signals.

6. The laser beam system of claim 5, further comprising a light-guiding element positioned to guide the first part of the source laser beam to the power detector and guide a second part of the source laser beam to the at least one scanning galvanometer.

7. The laser beam system of claim 6, wherein the light-guiding element is configured to reflect the first part of the source laser beam to the power detector and transmit the second part of the source laser beam to the at least one scanning galvanometer.

8. The laser beam system of claim 5, wherein the controller is configured to obtain a current power of the source laser beam from the light source according to the feedback signals from the power detector; and
the controller is further configured to determine that the light source is functioning normally if the current power is consistent with an initial power of the light source, and that the light source is functioning abnormally if the current power is not consistent with the initial power of the light source.

9. The laser beam system of claim 1, wherein the information of the target object comprises at least a distance, and a shape of the target object.

10. The laser beam system of claim 1, wherein the at least one scanning galvanometer comprises a plurality of scanning galvanometers, each of the plurality of scanning galvanometers is rotatable; and
the controller is configured to control each of the plurality of scanning galvanometers to project the source laser beam to the target object at different angles by controlling each of the plurality of scanning galvanometers to rotate individually.

11. A lidar comprising:
a laser beam system of any one of claims 1-10; and
a display device electrically connected to the laser beam system, wherein the display device is configured to receive the information and display images according to the information from the controller.
